# EUROPÄISCHE PATENTSCHRIFT

(11) **EP 0 504 596 B1**
(45) Veröffentlichungstag und Bekanntmachung des Hinweises auf die Patenterteilung: **26.07.1995**
(21) Anmeldenummer: 92102603.5
(22) Anmeldetag: 17.02.1992
(51) Int. Cl.: B60T 17/00

(54) **Druckluftversorgungseinrichtung für Druckluftanlagen von Fahrzeugen**
Compressed air supply installation for compressed air systems of vehicles
Installation d'alimentation en air comprimé pour des installations d'air comprimé de véhicules

(30) Priorität: 20.03.1991 DE 4109177
(43) Veröffentlichungstag der Anmeldung: 23.09.1992
(73) Patentinhaber: KNORR-BREMSE AG, 80710 München (DE)
(72) Erfinder: Haupt, Robert, W-8000 München 80 (DE); Wosegien, Bernd, W-8000 München 83 (DE)

(56) Entgegenhaltungen:
- AT-B- 394 167
- DE-A- 3 211 662
- DE-A- 4 013 409
- GB-A- 1 262 482
- LU-A- 81 588

## Beschreibung

Die Erfindung betrifft eine Druckluftversorgungseinrichtung für Druckluftanlagen von Fahrzeugen, beispielsweise Druckluftbremsanlagen von Schienenfahrzeugen, mit einem ölgeschmierten Kompressor und einem nachgeschalteten, druckluftdurchströmten oder -betätigten Druckluftregel-, -behandlungs- und/oder Speichergeräten wie beispielsweise Druckluftkühler, Ölabscheider, Druckregler, Lufttrockner und/oder Luftbehälter oder dgl., deren wenigstens eines Gerät oder Verbindungsleitung zwischen diesen Geräten einen manuell oder automatisch zu öffnenden und wieder zu schließenden Auslaß zum Ablassen von ggf. mit Luft gemischtem Kondensat oder von während Leerlaufphasen des Kompressors von diesem geförderter Luft aufweist.

Bei derartigen, weitverbreiteten Druckluftversorgungseinrichtungen sammelt sich während des Betriebes vor dem geschlossenen Auslaß Kondensat an, welches mit Schmieröl des Kompressors versetzt sein kann; der Ölanteil im Kondensat kann beispielsweise ca. 2% betragen. Beim Öffnen des Auslasses, welches entweder in regelmäßigen Intervallen manuell oder vorzugsweise in Abhängigkeit von anlagenbetriebsabhängigen Parametern selbsttätig erfolgt, wird bei bisherigen Druckluftversorgungseinrichtungen das ölhaltige Kondensat aus dem Auslaß ins Freie gefördert, wobei in der Druckluftversorgungseinrichtung anstehende Druckluft mit dem Kondensat und noch eine bestimmte Zeitspanne nach diesem zur Atmosphäre abströmen kann und hierbei das Kondensat zerstäuben kann.

Des weiteren sind derartige Druckluftversorgungseinrichtungen häufig derart ausgebildet, daß der Druckregler sie alternierend auf Druckluftförderung und Leerlauf umschaltet, wobei im Leerlauf der Kompressor zumindest annähernd überdrucklose Luft aus einem ggf. schallgedämpften Auslaß zur Atmosphäre fördert. Die während des Leerlaufes durch den Auslaß geförderte Luft enthält häufig Schmieröl des Kompressors, dieses Schmieröl kann in Art eines Aerosols in der Luft verteilt enthalten sein. Ein geringer Teil dieses Öls kann sich in dem vorerwähnten Kondensat absetzen, ein großer Teil wird jedoch durch den Auslaß zur Atmosphäre gefördert und gelangt so in die Umwelt. Da bereits ein kleiner Kompressor durchschnittlich einen Ölverbrauch von 2 kg Öl pro Jahr aufweist, wobei sich dieses Öl größtenteils im vorerwähnten Kondensat bzw. der ebenfalls vorerwähnten, während Leerlaufphasen zur Atmosaphäre abströmenden Luft wiederfindet, ergibt sich somit angesichts der Vielzahl von in Betrieb befindlichen Kompressoren eine beachtliche Umweltbelastung.

Das Schmieröl von Kompressoren für Fahrzeug-Druckluftversorgungseinrichtungen ist zumeist mit Additiven versetzt, welche derart wirken, daß es bei Versatz mit Wasser, wie es durch bei Fahrzeug-Kompressoren unvermeidlich anfallendes Kondenswasser der Fall ist, doch seine Schmierfähigkeit behält. Diese Additive erschweren es außerordentlich, das Kompressoren-Schmieröl in Druckluftversorgungseinrichtungen von Fahrzeugen aus der geförderten Luft bzw. dem Kondensat wenigstens annähernd wasserfrei abzuscheiden und zu sammeln, damit nur wenigstens annähernd ölfreie Luft bzw. ölfreies Kondensat, welche beide nicht mehr umweltgefährdend wären, in diese Umwelt abgelassen werden. Die bisher für derartige Druckluftversorgungseinrichtungen bekannten Ölabscheider vermögen nur relativ große Öltropfen aus der Druckluft abzuscheiden, sie können daher das vorstehend erläuterte Problem nicht lösen, an ihnen vor- und nachgeordneten Geräten kann an deren Auslässen ölhaltiges Kondensat oder ölhaltige Luft abströmen.

Beispiele von Kondensat-Abscheidevorrichtungen sind z.B. der LU-A-81588 und der DE-A-32 11662 zu entnehmen. Die letztgenannte weist in einem Absperrventil ein Schmutzfilter mit einem durch ein Griffstück herausnehmbaren Schmutzsieb auf.

Es ist somit Aufgabe der Erfindung, eine Druckluftversorgungseinrichtung der eingangs genannten Art in einfacher und billiger und zumeist auch nachrüstbarer Weise derart auszugestalten, daß die Umweltbelastung durch aus diesen Druckluftversorgungseinrichtungen stammendes Schmieröl des Kompressors zumindest weitgehend verringert, möglichst aber ganz vermieden wird.

Diese Aufgabe wird nach der Erfindung dadurch gelöst, daß ein Kondensatsammelbehälter vorgesehen ist, der einerseits vermittels wenigstens eines Eingangsanschlusses an den wenigstens einen Auslaß und andererseits an eine Entlüftung angeschlossen ist, daß den Kondensatsammelbehälter Strömungsberuhigungs- und Kondensat- bzw. Ölnebelabscheidemittel derart zugehören, daß ihm ggf. mit abzulassender Luft vermischt zugeführtes Kondensat bzw. zugeführter Ölnebel abgeschieden und im Kondensatsammelbehälter gesammelt wird und aus dem Kondensatsammelbehälter nur zumindest weitgehend von Kondensat und/oder Ölneben befreite Luft zur Entlüftung strömt und daß das im Kondensatsammelbehälter sich ansammelnde Kondensat und/oder Öl aus diesem beispielsweise vermittels eines Wechselbehälters oder eines schaltbaren Ablasses leicht entfernbar ist. In dem erfindungsgemäßen Kondensatsammelbehälter sammelt sich das während sowohl der Förder- wie während der Leerlaufphasen des Kompressors mit dessen geförderter Luft mitgenommene Schmieröl an, gleichgültig, ob es mit dem Kondensat ausfällt, in dieses durch anderweitige Vorgänge gelangt oder beispielsweise insbesondere während der Förderphasen vom Ölabscheider abgeschieden oder während der Leerlaufphasen mit der Leerlaufluft aerosol- oder nebelartig mitgenommen wird.

Nach der weiteren Erfindung vorteilhafte Ausgestaltungsmöglichkeiten für eine derartige Druckluftversorgungseinrichtung sind den abhängigen Ansprüchen entnehmbar.

In den Zeichnunen ist ein Ausführungsbeispiel für eine nach der Erfindung ausgebildete Druckluftversorgungseinrichtung dargestellt und zwar zeigt
- Fig.1: schematisch den Aufbau einer derartigen Druckluftversorgungseinrichtung und
- Fig.2a bis 2c: einen Kondensatsammelbehälter in Seitenansicht und Stirnansicht, jeweils teilweise aufgeschnitten, und in Aufsicht, jeweils in vergrößertem Maßstab.

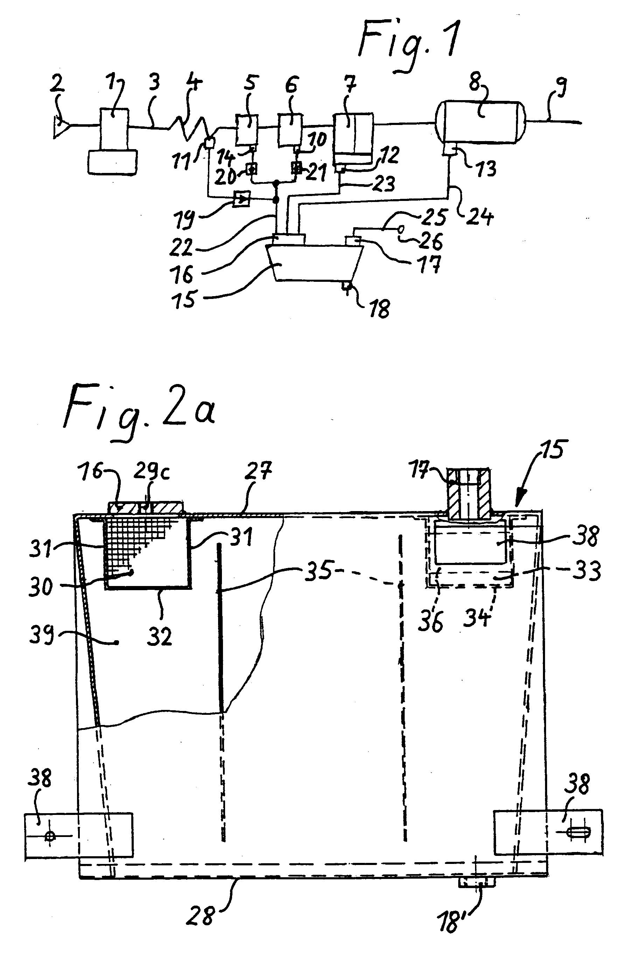

Die Fig.1 zeigt einen Kompressor 1, welcher über ein Luftfilter 2 angesaugte Luft in eine Rohrleitung 3 fördert. Die Rohrleitung 3 steht über in Serie angeordnete Einzelgeräte, wie nach Fig.1 einen Luftkühler 4, einen Ölabscheider 5, einen Druckregler 6 und einen Lufttrockner 7 mit einem Luftbehälter 8 in Verbindung, von welchem eine Rohrleitung 9 zum nicht dargestellten Druckluftverbraucher, beispielsweise der Druckluftbremsanlage eines Fahrzeuges, ausgeht. Der Kompressor 1 ist ölgeschmiert; der Druckregler 6 schaltet in Abhängigkeit vom nach ihm, insbesondere vom im Luftbehälter 8 herrschenden Druck alternativ auf Förderphase, während welcher der Kompressor 1 Druckluft durch die vorerwähnten Geräte in den Luftbehälter 8 fördert, oder auf Leerlaufphase, während welcher der Kompressor 1 über das Luftfilter 2 angesaugte Luft nahezu drucklos durch die Rohrleitung 3 zu einem Auslaß 10 des Druckreglers 6 fördert, von welchem Auslaß 10 die Luft in später zu beschreibender Weise zur Atmosphäre gelangt; während dieser Leerlaufphase unterbricht der Druckregler 6 die Verbindung des Kompressors 1 zum Luftbehälter 8.

Der Luftkühler 4, der Lufttrockner 7 und der Luftbehälter 8 sind jeweils mit einem Kondensatablaßventil versehen, deren jedes einen Auslaß 11, 12 bzw. 13 für das in dem jeweiligen Gerät abgeschiedene Kondensat bildet. Die Kondensatablaßventile können beliebiger Bauart sein, es können handbetätigbare Absperrventile bzw. -hähne oder automatisch in Abhängigkeit von bestimmten Betriebsparametern der Druckluftversorgungseinrichtung schaltende Entwässerungsventile sein. Ein entsprechender, zumeist handbetätigbarer Auslaß 14 ist am Ölabscheider 5 vorgesehen.

Die Druckluftversorgungseinrichtung kann die zwischen dem Kompressor 1 und dem Luftbehälter 8 befindlichen Geräte auch in anderer Anordnung aufweisen, sie kann eines oder mehrerer dieser Geräte entbehren, sie kann zusätzliche, nicht dargstellte Geräte bekannter Bauart und Funktion aufweisen und nicht alle Geräte müssen mit einem Auslaß versehen sein.

Die Druckluftversorgungseinrichtung weist des weiteren einen Kondensatsammelbehälter 15 auf, der an seiner Oberseite einerseits mit einem Eingangsanschluß 16 und andererseits mit einem Ausgangsanschluß 17 versehen ist. Am Boden des Kondensatsammelbehälters 15 befindet sich ein handbetätigbarer Ablaß 18. Beim Ausführungsbeispiel nach Fig.1 sind die Auslässe 11, 14 und 10 über jeweils ein in Strömungsrichtung von diesem Auslaßweg öffnendes Rückschlagventil 19,20 bzw. 21 an eine gemeinsame Sammelleitung 22 angeschlossen, welche zum Eingangsanschluß 16 führt. Die beiden Auslässe 12 und 13 sind über jeweils eigene, gesonderte Auslaßleitungen 23 bzw. 24 gesondert mit dem Eingangsanschluß 16 verbunden. Vom Ausgangsanschluß 17 führt eine Leitung 25 zu einer Entlüftungs 26 zur Atmosphäre, in die Leitung 25 kann ein üblicher, nicht dargetellter Schalldämpfer eingeordnet sein. Ebenso kann in eine oder mehrere der Leitungen 22,23 oder 24 ein Schalldämpfer eingeordnet sein, dort ist er jedoch verschmutzungs- und verstopfungsanfälliger als in der Leitung 25.

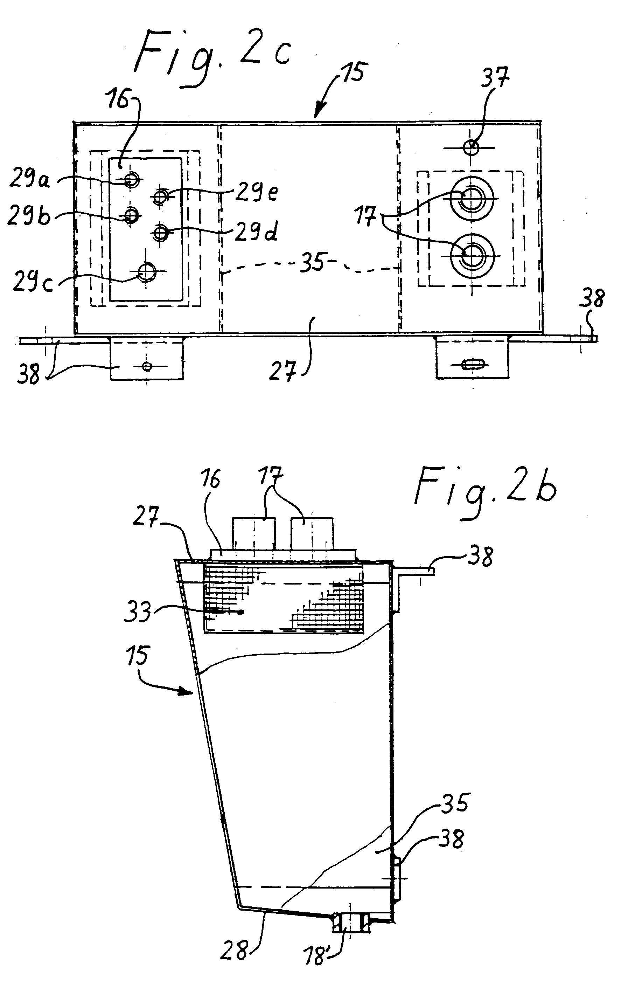

Der Kondensatsammelbehälter 15 ist gemäß den Figuren 2a-2c kastenartig mit einer Oberseite 27 und einem Boden 28 ausgebildet. Drei Seitenwände des Kondensatsammelbehälters 15 sind schräggestellt, derart, daß sich sein Innenraum nach oben hin erweitert; In Fig.1 ist diese Erweiterung besonders deutlich dargestellt. Der Boden 28 ist, wie aus Fig.2b ersichtlich, etwas geneigt ausgeführt, nahe seiner tiefsten Stelle befindet sich ein den Boden 28 durchsetzender Rohranschluß 18' des Ablasses 18, an welchen ein in den Figuren 2a und 2b nicht dargestelltes, handbetätigbares Absperrventil bzw. ein Absperrhahn anzuschließen ist. Der Eingangsanschluß 16 befindet sich an der Oberseite 27 des Kondensatsammelbehälters 15, er weist mehrere Rohranschlüsse 29a, b, c, d und e auf, an welche die Sammelleitung 22 bzw. die Auslaßleitungen 23 und 24 bzw. weitere derartige Leitungen anzuschließen sind; nicht benötigte Rohranschlüsse sind durch Stopfen zu verschließen. Alle diese Rohranschlüsse 29a-e münden in einem in Inneren des Kondensatsammelbehälters 15 an der Oberseite 27 angebrachten Eingangskorb 30 ein, dessen Seitenwandungen 31 aus Lochblechen bzw. Drahtgewebe und dessen Boden 32 aus einem geschlossenen Blechteil gefertigt ist. Der Ausgangsanschluß 17 ist gemäß Fig.2c und 2b mit zwei Rohranschlüssen zum Anschluß zweier Leitungen 25 versehen, welche zu einer gemeinsamen oder zu zwei getrennten Entlüftungen 26 führen können; bei Nichtbedarf einer dieser Leitungen 25 ist einer der Rohranschlüsse durch einen Stopfen zu verschließen. Innerhalb des Kondensatsammelbehälters 15 münden die Rohranschlüsse des Ausgangsanschlusses 17 in einen Ausgangskorb 33 ein, welcher wie der Eingangskorb 30 ausgebildet sein kann, sein Boden 34 kann jedoch ebenfalls aus einem Lochblech oder einem Drahtgewebe bestehen. Die Böden 32 und 34 befinden sich in einer Höhenlage im Kondensatsammelbehälter 15, welche mit Abstand oberhalb der maximalen Füllstandhöhe für den Kondensatsammelbehälter 15 ist. Im Kondensatsammelbehälter 15 sind zwischen den beiden Körben 30 und 33 Schwallbleche 35 angeordnet, welche sich quer von einer Seite bis zur anderen Seite erstrecken, unten kurz vor dem Boden 28 und oben dicht unterhalb der Oberseite 27 enden. Auch in den Körben 30 bzw. 33 können sich kleine Schwallbleche befinden, ein derartiges Schwallblech 36 ist im Ausgangskorb 33 / Fig.2a dargestellt. Weitere, nicht dargestellte Schwallbleche können sich von der Oberseite 27 her in den Innenraum des Kondensatsammelbehälters 15 bis unterhalb der Oberkante der Schwallbleche 35, aber noch mit gutem Abstand oberhalb des maximalen Kondensatfüllstandes, erstrecken. Der Eingangskorb 30 und/oder der Ausgangskorb 33 können in nicht dargestellter Weise mit strömungsbehindernden Formkörpern, insbesondere Kugeln und/oder rohrabschnittartigen Körpern mit geschlossener oder offener Ringkontur, gefüllt sein. An der Oberseite 27 befindet sich nahe des Ausgangsanschlusses 17 ein als Berstscheibe 37 ausgebildetes Überdruckventil, welches bei Überschreiten einer bestimmten Druckgrenze im Kondensatsammelbehälter 15 öffnet und ein Überschreiten dieser Druckgrenze ausschließt. Zum Haltern des Kondensatsammelbehälters 15 sind an diesem Halterungslaschen bzw. -winkel 38 angeordnet.

Beim Öffnen eines oder mehrer der Auslässe 12-14 strömt dem Eingangsanschluß 16 durch eine oder mehrere der Leitungen 22-24 Kondensat, Luft-Kondensatgemisch oder Luft zu, wobei jeweils Schmieröl des Kompressors flüssig, in Tropfenform, dispergiert, als Aerosol oder nebelartig enthalten sein kann. Das zuströmende Medium gelangt in den Eingangskorb 30, an den in diesem enthaltenen Strömungskörpern bzw. seinen Lochblech- bzw. Drahtgewebewänden trennen sich die flüssigen und die gasförmigen Bestandteile des zugeführten Mediums, die flüssigen Bestandteile, also das Kondensat, das Schmieröl bzw. die Mischung aus beiden läuft aus dem Eingangskorb 30 in den Innenraum 39 des Kondensatsammelbehälters 15 ab und sammelt sich auf dessen Boden 28 an. Die gasförmigen Bestandteile, also die Luft, strömt dicht unterhalb der Oberseite 27 über die Schwallbleche 35 hinweg bzw. unter den sich von der Oberseite 27 abwärts erstreckenden, vorerwähnten Schwallblechen vorbei zum Ausgangskorb 33, wo ihre Strömung nochmals durch ggf. eingelegte Formkörper sowie das Schwallblech 36 zum Abscheiden evtl. noch mitgeführter, restlicher Kondensat- bzw. Schmierölanteile umgelenkt wird. Die so weitestgehend von Kondensat und Schmieröl befreite Luft strömt sodann durch den Ausgangsanschluß 17, die Leitung 25 und die Entlüftung 26 zur Atmosphäre ab. Die Schwallbleche 35, aber auch der Eingangskorb 30 sowie Ausgangskorb 33 mitsamt deren Formkörperfüllung bzw. dem Schwallblech 36 bewirken, daß Fahrstöße bzw. Bewegungen des den Kondensatsammelbehälter 15 aufweisenden Fahrzeuges nicht zu derartigem Schwappen des im Innenraum 39 angesammelten Kondensat-Schmierölgemisches führen können, daß dieses Gemisch aus dem Eingangsanschluß 16 bzw. dem Ausgangsanschluß 17 austreten kann. Die geschlossenen Böden 32 und 34 wirken ebenfalls einem Austreten des Kondensat-Schmierölgemisches beim Schwappen entgegen, der Boden 32 schließt zudem beim Eintritt eines Kondensat-Schmieröl-Luftstrahles durch den Eingangsanschluß 16 dessen hartes Auftreffen und Aufwirbeln des bereits im Innenraum 39 angesammelten Kondensat-Schmierölgemisches aus. Es kann zweckmäßig sein, in nicht dargestellter Weise in die Rohranschlüsse 29a-29e Einsatzkörper einzusetzen, welche beim Durchströmen Atmosphärenluft ansaugen und mit dem sie durchströmenden Medium mischen; der in den Eingangskorb 30 austretende Mediumstrahl kann hierdurch entschärft und aufgelockert werden.

Die Rückschlagventile 19,20 und 21 schließen beim gleichzeitigen Öffnen wenigstens zweier der Auslässe 10,11,14 aus, daß Kondensat oder Luft von einem zum anderen der Auslässe gelangt, was evtl. zu Störungen führen könnte.

Die sich nach oben erweiternde Ausführungsform des Kondensatsammelbehälters 15 schließt beim Einfrieren in ihm befindlichen Kondensates aus, daß der Kondensatsammelbehälter 15 platzt. Hierzu kann auch am Kondensatsammelbehälter 15 eine nicht dargestellte Frostschutzheizung vorgesehen sein, welche bei Einfriergefahr sich einschaltet und somit das Einfrieren des angesammelten Kondensates verhindert.

Vor Erreichen eines mit Abstand unterhalb der Böden 32 und 34 liegenden, maximalen Kondensatfüllstandes, insbesondere in regelmäßigen, ein Erreichen dieses maximalen Kondensatfüllstandes sicher ausschließenden Zeitintervallen ist der Ablaß 18 manuell zu öffnen und das im Innenraum 39 angesammelte Kondensat-Schmierölgemisch in einen Behälter abzulassen. Das Kondensat-Schmierölgemisch kann sodann ordentlich entsorgt werden.

Es kann zweckmäßig sein, den Kondensatsammelbehälter 15 tiefer als die anderen Geräte der Druckluftversorgungseinrichtung anzuzordnen und die Leitungen 22,23 und 24 mit Gefälle zu diesem zu verlegen. Es ist jedoch auch möglich, den Kondensatsammelbehälter 15 höher als die Geräte anzuordnen, die beim Öffnen der Auslässe 10-14 entweichende Druckluft muß dann das Kondensat mitreißen und zum Kondensatsammelbehälter 15 fördern.

In Abänderung vom dargestellten Ausführungsbeispiel des Kondensatsammelbehälters kann dessen Innenraum durch eine geeignete Längsinnenwand U-förmig sein, der Eingangsanschluß 16 und Ausgangsanschluß 17 sind dann nebeneinander an jeweils einem Schenkelende des U anzuordnen. Hierdurch kann ein besonders guter Öl- bzw. Kondensat-Abscheidegrad erreicht werden.

In weiterer Abänderung kann der Kondensatsammelbehälter unter Entfall des Ablasses 18 einen leicht lösbaren, topfartigen Behälter aufweisen bzw. zu einem derartigen Behälter ausgebildet sein, in welchem sich das Kondensat und Schmieröl sammelt. Durch Behältertausch kann dann das Schmieröl und Kondensat entfernt werden.

### Bezugszeichenliste

- 1: Kompressor
- 2: Luftfilter
- 3: Rohrleitung
- 4: Luftkühler
- 5: Ölabscheider
- 6: Druckregler
- 7: Lufttrockner
- 8: Luftbehälter
- 9: Rohrleitung
- 10: Auslaß
- 11: Auslaß
- 12: Auslaß
- 13: Auslaß
- 14: Auslaß
- 15: Kondensatsammelbehälter
- 16: Eingangsanschluß
- 17: Ausgangsanschluß
- 18: Ablaß
- 18': Rohranschluß
- 19: Rückschlagventil
- 20: Rückschlagventil
- 21: Rückschlagventil
- 22: Sammelleitung
- 23: Auslaßleitung
- 24: Auslaßleitung
- 25: Leitung
- 26: Entlüftung
- 27: Oberseite
- 28: Boden
- 29a,b,c,d,e: Rohranschluß
- 30: Eingangskorb
- 31: Seitenwandung
- 32: Boden
- 33: Ausgangskorb
- 34: Boden
- 35: Schwallblech
- 36: Schwallblech
- 37: Berstscheibe
- 38: Halterungslasche bzw. -winkel
- 39: Innenraum

## Patentansprüche

1. Druckluftversorgungseinrichtung für Druckluftanlagen von Fahrzeugen, beispielsweise Druckluftbremsanlagen von Schienenfahrzeugen, mit einem ölgeschmierten Kompressor (1) und diesem nachgeschalteten, druckluftdurchströmten oder -betätigten Druckluftregel-, -behandlungs- und/oder Speichergeräten wie beispielsweise Druckluftkühler (4), Ölabscheider (5), Druckregler (6), Lufttrockner (7) und/oder Luftbehälter (8) oder dergleichen, deren wenigstens eines Gerät oder Verbindungsleitung zwischen diesen Geräten einen manuell oder automatisch zu öffnenden und wieder zu schließenden Auslaß (10-14) zum Ablassen von gegebenenfalls mit Luft gemischtem Kondensat oder von während Leerlaufphasen des Kompressors (1) von diesem geförderter Luft aufweist, dadurch gekennzeichnet, daß ein Kondensatsammelbehälter (15) vorgesehen ist, der einerseits vermittels wenigstens eines Eingangsanschlusses (16) an alle Auslässe (10-14) und andererseits an eine Entlüftung (26) angeschlossen ist, daß dem Kondensatsammelbehälter (15) Strömungsberuhigungs- und Kondensat- bzw. Ölnebelabscheidemittel (35,36) derart zugehören, daß ihm gegebenenfalls mit abzulassender Luft vermischt zugeführtes Kondensat bzw. zugeführter Ölnebel abgeschieden und im Kondensatsammelbehälter (15) gesammelt wird und aus dem Kondensatsammelbehälter (15) nur zumindest weitgehend von Kondensat und/oder Ölnebel befreite Luft zur Entlüftung (26) strömt, und daß das im Kondensatsammelbehälter (15) sich ansammelnde Kondensat und/oder Öl aus diesem beispielsweise vermittels eines Wechselbehälters oder eines schaltbaren Ablasses (18) leicht entfernbar ist.

2. Druckluftversorgungseinrichtung nach Anspruch 1, dadurch gekennzeichnet, daß bei Vorhandensein mehrerer Auslässe (16-14) zumindest einige dieser Auslässe (12,13) über gesonderte Auslaßleitungen (23,24) mit gesonderten Rohranschlüssen (29a-e) des Eingangsanschlusses (16) des Kondensatsammelbehälters (15) verbunden sind, wobei die Rohranschlüsse (29a-e) mit einem gemeinsamen Kondensatsammelraum (39) in Verbindung stehen.

3. Druckluftversorgungseinrichtung nach Anspruch 1 oder 2, dadurch gekennzeichnet, daß bei Vorhandensein mehrerer Auslässe (10-14) zumindest einige dieser Auslässe (10,11,14) über jeweils ein in dieser Strömungsrichtung öffnendes Rückschlagventil (19,20,21) an eine gemeinsame Sammelleitung (22) angeschlossen sind, die zu einem Rohranschluß (29a-e) des Eingangsanschlusses (16) des Kondensatsammelbehälters führt.

4. Druckluftversorgungseinrichtung nach einem oder mehreren der vorstehenden Ansprüche, dadurch gekennzeichnet, daß dem Kondensatsammelbehälter (15) wenigstens ein Schalldämpfer vorund/oder nachgeschaltet ist.

5. Druckluftversorgungseinrichtung nach einem oder mehreren der vorstehenden Ansprüche, dadurch gekennzeichnet, daß der oder die Eingangs- bzw. Rohranschlüsse (16;29a-e) des Kondensatsammelbehälters (15) in diesem von oben in einen Eingangskorb (30) einmünden, der aus Lochblechen, Drahtgewebe oder dergleichen luft- und kondensatdurchgängig, aber strömungsdämpfend ausgebildet ist und dessen Boden (32) sich im Abstand über dem maximalen Kondensatfüllstand im Kondensatsammelbehälter (15) befindet.

6. Druckluftversorgungseinrichtung nach einem oder mehreren der vorstehenden Ansprüche, dadurch gekennzeichnet, daß der Kondensatsammelbehälter (15) an seiner Oberseite (27) einen Ausgangsanschluß (17) aufweist, an welchen die Entlüftung (26) angeschlossen ist, welcher sich strömungsbezogen an einer weitgehend von dem Eingangsanschluß (16) entfernten Stelle befindet und an welchem sich im Inneren des Kondensatsammelraumes (15) ein aus luftdurchgängigen Lochblechen, Drahtgewebe, Sintermaterial oder dergleichen ausgebildeter Ausgangskorb (33) anschließt, dessen Boden (34) sich im Abstand über dem maximalen Kondensatfüllstand im Kondensatsammelbehälter (15) befindet.

7. Druckluftversorgungseinrichtung nach Anspruch 5 und/oder 6, dadurch gekennzeichnet, daß der Boden (32,34) des Eingangs- und/oder des Ausgangskorbes (30,33) luft- und kondensatundurchlässig ausgebildet ist.

8. Druckluftversorgunseinrichtung nach einem oder mehreren der Ansprüche 5 bis 7, dadurch gekennzeichnet, daß sich im Eingangs- und/oder Ausgangskorb (30,33) strömungsbehindernde Mittel, wie Prallbleche (36) und/oder Formkörper, insbesonders Kugeln und/oder rohrabschnittartige Körper mit geschlossener oder offener Ringkontur, befinden.

9. Druckluftversorgungseinrichtung nach einem oder mehreren der vorstehenden Ansprüche, dadurch gekennzeichnet, daß jeder Rohranschluß (29a-e) des Eingangsanschlusses (16) einen ihn durchströmendes Kondensat mit angesaugter Atmosphärenluft mischenden Einsatzkörper aufweist.

10. Druckluftversorgungseinrichtung nach einem oder mehreren der vorstehenden Ansprüche, dadurch gekennzeichnet, daß der Innenraum des Kondensatsammelbehälters (15) mit Schwallblechen (35) und/oder Strömungsumleitblechen ausgestattet ist.

11. Druckluftversorgungseinrichtung nach einem oder mehreren der vorstehenden Ansprüche, dadurch gekennzeichnet, daß die Wandung des Kondensatsammelbehälters (15) im Bereich oberhalb des maximalen Kondensatfüllstandes von einem gegebenenfalls als Berstscheibe (37) ausgebildeten Überdruckventil durchbrochen ist.

12. Druckluftversorgungseinrichtung nach Anspruch 11, dadurch gekennzeichnet, daß das Überdruckventil (37) sich an der Oberseite des Kondensatsammelbehälters (15) nahe des Ausgangsanschlusses (17) für die Entlüftung (26) befindet.

13. Druckluftversorgungseinrichtung nach einem oder mehreren der vorstehenden Ansprüche, dadurch gekennzeichnet, daß der Kondensatsammelbehälter (15) zumindest in seiner Höhenerstreckung vom Boden bis zur maximalen Kondensatfüllstandshöhe sich nach oben erweiternd ausgebildet ist.

14. Druckluftversorgungseinrichtung nach einem oder mehreren der vorstehenden Ansprüche, dadurch gekennzeichnet, daß im bzw. am Kondensatsammelbehälter (15) eine Frostschutzheizung vorgesehen ist.

## Claims

1. Compressed air supply device for compressed air installations in vehicles, for instance compressed air brake installations in rail vehicles, having an oil-lubricated compressor (1) and compressed air regulation, treatment and/or storage devices such as, for instance, compressed air coolers (4), oil separators (5), pressure regulators (6), air dryers (7) and/or air tanks (8) or the like, connected downstream of this compressor, having compressed air flowing through them, or being actuated by compressed air, of which at least one device or connecting line between these devices has an outlet (10-14) which can be manually or automatically opened and closed again for discharging condensate possibly mixed with air or air conveyed from the compressor (1) during idling phases of the compressor, characterised in that a condensate-collecting tank (15) is provided which on the one hand is connected by means of at least one input connection (16) to all the outlets (10-14) and on the other hand to a ventilation means (26), in that flow-stabilising means and condensate or oil mist-separating means (35, 36) are associated with the condensate-collecting tank (15) in such a way that condensate or oil mist conveyed to it, possibly mixed with air to be discharged, is separated and collected in the condensate-collecting tank (15), and only air at least substantially free from condensate and/or oil mist flows out of the condensate-collecting tank (15) to the ventilation means (26), and in that the condensate and/or oil collecting in the condensate-collecting tank (15) can be easily removed from it, for instance by means of a replacement tank or a switchable discharge (18).

2. Compressed air supply device according to claim 1, characterised in that with several outlets (10-14) present at least some of these outlets (12, 13) are connected by means of separate outlet lines (23, 24) to separate spigots (29a-e) of the input connection (16) of the condensate-collecting tank (15), the spigots (29a-e) being in communication with a common condensate-collecting chamber (39).

3. Compressed air supply device according to claim 1 or 2, characterised in that with several outlets (10-14) present at least some of these outlets (10, 11, 14) are connected respectively by means of a non-return valve (19, 20, 21) opening in this flow direction to a common collecting line (22) which leads to a spigot (29a-e) of the input connection (16) of the condensate-collecting tank.

4. Compressed air supply device according to one or more of the preceding claims, characterised in that at least one silencer is connected upstream and/or downstream of the condensate-collecting tank (15).

5. Compressed air supply device according to one or more of the preceding claims, characterised in that the one or more input connections or spigots (16; 29a-e) of the condensate-collecting tank (15) issue in the tank from above into an input basket (30) which is constructed from perforated plates, wire mesh or the like, is permeable to air and condensate but damps the flow, and whose base (32) is spaced above the maximum condensate filling state in the condensate-collecting tank (15).

6. Compressed air supply device according to one or more of the preceding claims, characterised in that the condensate-collecting tank (15) has on its upper side (27) an output connection (17) to which is connected the ventilation means (26) which is located at a point substantially remote from the input connection (16) with regard to flow and on which, inside the condensate-collecting chamber (15), there is connected an output basket (33) made of air-permeable perforated plates, wire mesh, sintered material or the like, the base (34) of which is spaced above the maximum condensate filling state in the condensate-collecting tank (15).

7. Compressed air supply device according to claim 5 and/or 6, characterised in that the base (32, 34) of the input and/or the output basket (30, 33) is constructed so as to be impermeable to air and condensate.

8. Compressed air supply device according to one or more of claims 5 to 7, characterised in that flow-preventing means, such as baffle plates (36) and/or moulded bodies, in particular balls and/or tubular sectioned bodies with a closed or open annular contour, are located in the input and/or output basket (30, 33).

9. Compressed air supply device according to one or more of the preceding claims, characterised in that each spigot (29a-e) of the input connection (16) has an insert body mixing condensate flowing through it with air drawn in from the atmosphere.

10. Compressed air supply device according to one or more of the preceding claims, characterised in that the interior of the condensate-collecting tank (15) is equipped with baffles (35) and/or flow-deflecting plates.

11. Compressed air supply device according to one or more of the preceding claims, characterised in that in the region above the maximum condensate filling state the walls of the condensate-collecting tank (15) are interrupted by an excess pressure valve possibly constructed as a rupture disc (37).

12. Compressed air supply device according to claim 11, characterised in that the excess pressure valve (37) is located on the upper side of the condensate-collecting tank (15) near the output connection (17) for the ventilation means (26).

13. Compressed air supply device according to one or more of the preceding claims, characterised in that the condensate-collecting tank (15) is designed to widen upwards, at least over the range of its height from the base to the maximum condensate filling state level.

14. Compressed air supply device according to one or more of the preceding claims, characterised in that an antifreeze heating device is provided in or on the condensate-collecting tank (15).

## Revendications

1. Dispositif d'alimentation en air comprimé pour des installations à air comprimé de véhicules, par exemple des installations de freinage à air comprimé de véhicules sur rails, comportant un compresseur à graissage à huile (1) et des appareils de réglage, de conditionnement et/ou d'accumulation à air comprimé placés en aval du compresseur, traversés ou actionnés par de l'air comprimé, comme par exemple un radiateur à air comprimé (4), un séparateur d'huile (5), un régulateur de pression (6), un sécheur d'air (7) et/ou un réservoir d'air (8) ou équivalent, au moins un appareil ou un conduit de raccordement entre ces appareils présentant une sortie (10-14) qui peut être ouverte et refermée, manuellement ou automatiquement, pour évacuer du condensat, le cas échéant mélangé à de l'air, ou de l'air refoulé par le compresseur (1) pendant des phases de marche à vide de celui-ci, caractérisée en ce qu'il est prévu un collecteur de condensat (15) qui est raccordé, d'une part, au moyen d'au moins un raccord d'entrée (16), à toutes les sorties (10-14) et, d'autre part, à une purge (26), en ce que des organes de stabilisation de l'écoulement et des organes de séparation de condensat et/ou de vapeur d'huile (35, 36) font partie du collecteur de condensat (15) de telle manière que du condensat et/ou de la vapeur d'huile, amené ce dernier, le cas échéant mélangé à de l'air à évacuer, est séparé et est recueilli dans le collecteur de condensat (15) et qu'il ne sort du collecteur de condensat (15) vers la purge (26) que de l'air exempt , au moins en grande partie, de condensat et/ou de vapeur d'huile et en ce que le condensat et/ou l'huile qui s' accumule dans le collecteur de condensat (15) peut facilement être enlevé de celui-ci par exemple au moyen d'un récipient de rechange ou d'une évacuation commutable (18).

2. Dispositif d'alimentation en air comprimé selon la revendication 1, caractérisé en ce que, lorsqu'il existe plusieurs sorties (10-14), au moins quelques unes de ces sorties (12 ,13) sont reliées par des conduites de sortie séparées (23, 24) à des raccords de tuyau séparés (29a-e) du raccord d'entrée (16) du collecteur de condensat (15), les raccords de tuyau (29a-e) étant en communication avec un espace collecteur commun de condensat (39).

3. Dispositif d'alimentation en air comprimé selon la revendication 1 ou 2, caractérisé en ce que lorsqu'il existe plusieurs sorties (10-14), au moins quelques unes de ces sorties (10, 11, 14) sont raccordées, chacune par une soupape de non-retour (19, 20, 21) qui s'ouvre dans ce sens d' écoulement, à une conduite collectrice commune (22) qui mène à un raccord de tuyau (29a-e) du raccord d'entrée (16) du collecteur de condensat.

4. Dispositif d'alimentation en air comprimé selon une ou plusieurs des revendications précédentes, caractérisé en ce qu'au moins un silencieux est placé en aval et/ou en amont du collecteur de condensat (15).

5. Dispositif d'alimentation en air comprimé selon une ou plusieurs des revendications précédentes, caractérisé en ce que le ou les raccord(s) d'entrée ou de tuyau (16 ; 29a-e) du collecteur de condensat (15) débouchent dans celui-ci, par le haut, dans un panier d'entrée (30) qui est constitué par des tôles perforées, du tissu métallique ou équivalent, laissant passer l'air et le condensat mais atténuant l' écoulement, et dont le fond (32) se trouve à une certaine distance au-dessus du niveau de remplissage maximum de condensat dans le collecteur de condensat (15).

6. Dispositif d'alimentation en air comprimé selon une ou plusieurs des revendications précédentes, caractérisé en ce que le collecteur de condensat (15) présente, sur sa face supérieure (27), un raccord de sortie (17), auquel la purge (26) est raccordée, qui se trouve à un endroit extrêmement éloigné du raccord d'entrée (16) par rapport à l'écoulement et auquel se raccorde, à l'intérieur de l'espace collecteur de condensat (15), un panier de sortie (33) formé en tôles perforées, en tissu métallique, en matériau fritté ou équivalent, perméables à l'air, dont le fond (34) se trouve à une certaine distance au-dessus du niveau de remplissage maximum de produit de condensation dans le collecteur de condensat (15).

7. Dispositif d'alimentation en air comprimé selon la revendication 5 et/ou 6, caractérisé en ce que le fond (32, 34) du panier d'entrée et/ou du panier de sortie (30, 33) est conçu imperméable à l'air et au condensat.

8. Dispositif d'alimentation en air comprimé selon une ou plusieurs des revendications 5 à 7, caractérisé en ce que des moyens qui empêchent l'écoulement, comme des chicanes (36) et/ou des corps moulés, en particulier des boules et/ou des corps du type tronçon de tube avec des contours annulaires fermés ou ouverts, se trouvent dans le panier d'entrée et/ou le panier de sortie (30, 33).

9. Dispositif d'alimentation en air comprimé selon une ou plusieurs des revendications précédentes, caractérisé en ce que chaque raccord de tuyau (29a-e) du raccord d'entrée (16) présente un insert mélangeant le condensat, qui traverse le raccord de tuyau, à l'air atmosphérique qui est aspiré.

10. Dispositif d'alimentation en air comprimé selon une ou plusieurs des revendications précédentes, caractérisé en ce que l'espace intérieur du collecteur de condensat (15) est équipé de tôles brise-jet (35) et/ou de tôles de déviation de l'écoulement.

11. Dispositif d'alimentation en air comprimé selon une ou plusieurs des revendications précédentes, caractérisé en ce que la paroi du collecteur de condensat (15) est traversée, dans la zone au-dessus du niveau de remplissage maximum de condensat, par une soupape de surpression qui est, le cas échéant, réalisée sous forme d'une plaque de rupture (37).

12. Dispositif d'alimentation en air comprimé selon la revendication 11, caractérisé en ce que la soupape de surpression (37) se trouve sur la face supérieure du collecteur de condensat (15) près du raccord de sortie (17) pour la purge (26).

13. Dispositif d'alimentation en air comprimé selon une ou plusieurs des revendications précédentes, caractérisé en ce que le collecteur de condensat (15) est réalisé de manière à s'élargir le haut, au moins dans sa partie d'extension en hauteur qui va du fond jusqu'au niveau de remplissage maximum de condensat.

14. Dispositif d'alimentation en air comprimé selon une ou plusieurs des revendications précédentes, caractérisé en ce qu'un chauffage de protection contre le gel est prévu dans ou sur le collecteur de condensat (15).
